# EUROPÄISCHE PATENTSCHRIFT

(11) **EP 2 072 859 B1**
(45) Veröffentlichungstag und Bekanntmachung des Hinweises auf die Patenterteilung: **24.11.2010**
(21) Anmeldenummer: 08171110.3
(22) Anmeldetag: 09.12.2008
(51) Int. Cl.: F16H 3/00

(54) **Schaltvorrichtung eines Zapfwellengetriebes**
Switching device of a p.t.o. shaft drive
Dispositif de commutation d'un engrenage d'arbre de prise de force

(30) Priorität: 22.12.2007 DE 102007062456
(43) Veröffentlichungstag der Anmeldung: 24.06.2009
(73) Patentinhaber: Deere & Company, Moline, IL 61265-8098 (US)
(72) Erfinder: Buhrke, Frank, 69488, Birkenau (DE)
(74) Vertreter: Dehnhardt, Florian Christopher

(56) Entgegenhaltungen:
- EP-A- 0 322 368
- EP-A- 0 665 130
- US-A- 3 464 277
- US-A- 3 830 111

## Beschreibung

Die Erfindung betrifft eine Schaltvorrichtung eines Zapfwellengetriebes eines landwirtschaftlichen Arbeitsfahrzeugs, insbesondere eines Traktors. Die Schaltvorrichtung umfasst eine von einem Motor des landwirtschaftlichen Arbeitsfahrzeugs antreibbare Eingangswelle und eine Ausgangswelle. Die Eingangswelle ist über drei Zahnradpaare mit der Ausgangswelle verbindbar, um wahlweise über eines der drei Zahnradpaare ein Drehmoment von der Eingangswelle auf die Ausgangswelle zu übertragen. Drei Zahnräder der Zahnradpaare sind der Eingangswelle zugeordnet. Die anderen drei Zahnräder der Zahnradpaare sind der Ausgangswelle zugeordnet. Ein Zahnrad eines Zahnradpaares ist drehfest mit der Eingangswelle oder der Ausgangswelle verbunden und das andere Zahnrad des Zahnradpaares ist beispielsweise mittels einer Schaltmuffe drehfest mit der Ausgangswelle oder der Eingangswelle verbindbar. Die zwei Zahnräder eines gemeinsamen Zahnradpaares kämmen miteinander. Die Ausgangswelle weist eine Ausnehmung auf, in welcher ein Zapfwellenstummel reversibel einführbar ist. An der Ausgangswelle ist ein von dem Zapfwellenstummel betätigbarer Mechanismus vorgesehen, mittels welchem eine an der Ausgangswelle vorgesehene und mit dieser drehfest verbundene Schaltmuffe betätigbar ist. In einer vorgegebenen Schaltstellung der Schaltmuffe ist diese drehfest mit einem Zahnrad eines ersten Zahnradpaares verbunden.

Bei der zwischen dem Zapfwellenstummel und der Ausgangswelle des Zapfwellengetriebes hergestellten Welle-Nabe-Verbindung handelt es sich um eine Formschlussverbindung, bei der ein Drehmoment durch ineinandergreifende Formen von der einen Welle auf die andere Welle übertragbar ist.

Beispielsweise ist bei John Deere Traktoren der Serien 5000, 6000 und 7000 die hintere Zapfwelle im Bereich des Traktorhecks derart ausgebildet, dass ein Zapfwellenstummel als umsteckbare doppelseitige Welle ausgeführt ist. Der Zapfwellenstummel weist an einem ersten Ende ein 6-Zahn-Profil und an einem zweiten Ende ein 21-Zahn-Profil auf. Die beiden Zahnprofile sind in einschlägigen Normen beschrieben. Der Bediener kann somit den Zapfwellenstummel mit dem einen oder anderen Ende in die Zapfwelle einführen. Auf diese Weise können unterschiedliche Arbeitsgeräte, die jeweils für einen Betrieb mit Normdrehzahlen von 540 RPM oder 1000 RPM (RPM - Revolutions Per Minute) vorgesehen sind, mit ihrer Antriebswelle an den Traktor angeschlossen werden.

Des Weiteren sind Zapfwellengetriebe bekannt, die durch Umdrehen bzw. Austausch des Zapfwellenstummels eine in dem Zapfwellengetriebe vorgesehene Schaltvorrichtung betätigen, um selbsttätig zwischen verschiedenen Zapfwellendrehzahlen umzuschalten. Eine derartige gattungsgemäße Schaltvorrichtung ist aus der US 3 830 111 A bekannt. Diese weist eine mit einer Schaltmuffe zusammenwirkende Hebelanordnung auf, die beim Einsetzen eines Zapfwellenstummels eine dem jeweiligen Zahnprofil entsprechende Zapfenwellendrehzahl am Zapfwellengentriebe einstellt. Aufgrund des komplexen Aufbaus und der Vielzahl beweglicher Bauteile ist die bekannte Schaltvorrichtung vergleichsweise störanfällig.

Der vorliegenden Erfindung liegt daher die Aufgabe zugrunde, eine Schaltvorrichtung der eingangs genannten Art derart weiterzubilden, dass sich diese durch einen vereinfachten und robusten Aufbau auszeichnet.

Diese Aufgabe wird durch die Lehre des unabhängigen Patentanspruchs 1 gelöst.

Die Schaltvorrichtung eines Zapfwellengetriebes eines landwirtschaftlichen Arbeitsfahrzeugs umfasst eine von einem Motor des Arbeitsfahrzeugs antreibbare Eingangswelle und eine Ausgangswelle. Die Eingangswelle ist über drei Zahnradpaare mit der Ausgangswelle verbindbar, um wahlweise über eines der drei Zahnradpaare ein Drehmoment von der Eingangswelle auf die Ausgangswelle zu übertragen. Drei Zahnräder der Zahnradpaare sind der Eingangswelle zugeordnet. Die anderen drei Zahnräder der Zahnradpaare sind der Ausgangswelle zugeordnet. Ein Zahnrad eines Zahnradpaares ist drehfest mit der Eingangswelle oder der Ausgangswelle verbunden und das andere Zahnrad des Zahnradpaares ist beispielsweise mittels einer Schaltmuffe drehfest mit der Ausgangswelle oder der Eingangswelle verbindbar. Die zwei Zahnräder eines gemeinsamen Zahnradpaares kämmen miteinander. Die Ausgangswelle weist eine Ausnehmung auf, in welcher ein Zapfwellenstummel reversibel einführbar ist. An der Ausgangswelle ist ein von dem Zapfwellenstummel betätigbarer Mechanismus vorgesehen, mittels welchem eine an der Ausgangswelle vorgesehene und mit der Ausgangswelle drehfest verbundene Schaltmuffe betätigbar ist. In einer vorgegebenen Schaltstellung der Schaltmuffe ist diese drehfest mit einem Zahnrad eines ersten Zahnradpaares verbunden. Erfindungsgemäß ist vorgesehen, dass in einer von der vorgegebenen Schaltstellung abweichenden weiteren Schaltstellung der Schaltmuffe die drehfeste Verbindung zwischen der Schaltmuffe und dem Zahnrad des ersten Zahnradpaares gelöst ist, wobei mittels einer weiteren Schaltmuffe eine drehfeste Verbindung mit einem Zahnrad des zweiten Zahnradpaares oder mit einem Zahnrad des dritten Zahnradpaares herstellbar ist.

Mit anderen Worten weist die Schaltmuffe mindestens zwei Schaltzustände auf. In einem ersten Schaltzustand ist die Schaltmuffe drehfest mit dem Zahnrad des ersten Zahnradpaares verbunden und steht mit diesem drehfest in Eingriff. In einem zweiten Schaltzustand ist die drehfeste Verbindung mit dem Zahnrad des ersten Zahnradpaares gelöst bzw. aufgehoben, sodass sich die Schaltmuffe in einem neutralen Schaltzustand bezüglich des ersten Zahnradpaars befindet.

Die weitere Schaltmuffe kann mindestens zwei, vorzugsweise jedoch drei Schaltzustände aufweisen. In einem ersten Schaltzustand steht die weitere Schaltmuffe mit einem Zahnrad des zweiten Zahnradpaares drehfest in Verbindung. In einem zweiten Schaltzustand steht diese mit einem Zahnrad des dritten Zahnradpaares drehfest in Verbindung. In einem dritten Schaltzustand steht die weitere Schaltmuffe weder mit dem Zahnrad des zweiten Zahnradpaares noch mit dem Zahnrad des dritten Zahnradpaares in drehfester Verbindung, sodass die weitere Schaltmuffe einen neutralen Schaltzustand bezüglich des zweiten und des dritten Zahnradpaares einnimmt.

Die weitere Schaltmuffe kann hierbei mittels einer mechanischen, elektromagnetischen, pneumatischen oder hydraulischen Aktuatoreinrichtung betätigt werden, welche insbesondere von einer elektronischen Steuereinrichtung angesteuert wird.

Insoweit ist mit der erfindungsgemäßen Schaltvorrichtung ein Zapfwellengetriebe verwirklichbar, welches bis zu drei unterschiedliche Übersetzungsverhältnisse aufweist und sich aufgrund seines kompakten Aufbaus durch besondere Robustheit auszeichnet.

Weitere vorteilhafte Ausgestaltungen und Weiterbildungen der Erfindung gehen aus den Unteransprüchen hervor.

Gemäß einer ersten Ausführungsform der Schaltvorrichtung ist die weitere Schaltmuffe drehfest mit der Ausgangswelle verbunden. Vorzugsweise ist die weitere Schaltmuffe zwischen zwei Zahnrädern des zweiten und dritten Zahnradpaares angeordnet. Die beiden Zahnräder sind als Losräder ausgebildet und der Ausgangswelle zugeordnet. Die Losräder des zweiten und dritten Zahnradpaares sind beispielsweise mittels Wälzlagern drehbar auf der Ausgangswelle befestigt. Steht die weitere Schaltmuffe mit dem Zahnrad bzw. dem Losrad des zweiten Zahnradpaares drehfest in Eingriff, erfolgt die Drehmomentübertragung zwischen der Eingangswelle und der Ausgangswelle über das zweite Zahnradpaar. Steht die weitere Schaltmuffe mit dem Losrad des dritten Zahnradpaares in drehfestem Eingriff, erfolgt die Drehmomentübertragung zwischen der Eingangswelle und der Ausgangswelle über das dritte Zahnradpaar.

In einer alternativen Ausführungsform der Schaltvorrichtung ist die weitere Schaltmuffe drehfest mit der Eingangswelle verbunden. Vorzugsweise ist die weitere Schaltmuffe zwischen als Losräder ausgebildeten und der Eingangswelle zugeordneten Zahnrädern des zweiten und dritten Zahnradpaares angeordnet. Die Losräder des zweiten und dritten Zahnradpaares sind beispielsweise mittels Wälzlagern drehbar auf der Eingangswelle befestigt. Demgemäß sind die beiden Losräder sowie die weitere Schaltmuffe auf der Eingangswelle angeordnet und die mit den beiden Losrädern kämmenden Zahnräder des zweiten bzw. dritten Zahnradpaares sind drehfest mit der Ausgangswelle verbunden. Mit anderen Worten sind sowohl die Losräder der zweiten und dritten Zahnradpaare als auch die weitere Schaltmuffe an der Eingangswelle angeordnet und die jeweils mit den Losrädern kämmenden Zahnräder der zweiten bzw. dritten Zahnradpaare sind mit der Ausgangswelle drehfest verbunden.

In einer weiteren Ausführungsform der Schaltvorrichtung ist ein Trägerbauteil vorgesehen, auf welchem die als Losräder ausgebildeten Zahnräder des zweiten und dritten Zahnradpaares drehbar gelagert sind. Das Trägerbauteil kann im Wesentlichen hülsenförmig ausgebildet sein und in einem mittleren Bereich die weitere Schaltmuffe tragen. Die weitere Schaltmuffe ist mit dem Trägerbauteil drehfest verbunden und auf diesem in axialer Richtung verschiebbar befestigt. Benachbart zur weiteren Schaltmuffe können die beiden Losräder des zweiten und dritten Zahnradpaares angeordnet sein. Insoweit kann das Trägerbauteil mit der weiteren Schaltmuffe und den beiden Losrädern als modulare Baugruppe der Ausgangswelle oder der Eingangswelle zugeordnet sein. Das Trägerbauteil ist drehfest mit der Ausgangswelle oder der Eingangswelle verbunden. Alternativ kann das Trägerbauteil gegenüber der Ausgangswelle verdrehbar angeordnet und mittels der Schaltmuffe drehfest mit der Ausgangswelle verbindbar sein. Hierzu können die Schaltmuffe und das Trägerbauteil jeweils eine entsprechende Verzahnung aufweisen, welche sich in einer vorgegebenen Schaltstellung der Schaltmuffe miteinander in Eingriff bringen lässt, um die drehfeste Verbindung zwischen der Ausgangswelle und dem Trägerbauteil herzustellen.

Wie bereits erwähnt, ist dem Trägerbauteil die weitere Schaltmuffe zugeordnet. In diesem Fall ist es zweckmäßig, die weitere Schaltmuffe drehfest mit dem Trägerbauteil zu verbinden. Insoweit wird mit der weiteren Schaltmuffe eine drehfeste Verbindung zwischen dem Trägerbauteil einerseits und einem der beiden Losräder des zweiten oder dritten Zahnradpaares andererseits hergestellt. Da das Trägerbauteil drehfest mit der Ausgangswelle bzw. der Eingangswelle verbunden ist, ist eine Drehmomentübertragung zwischen Eingangswelle und Ausgangswelle möglich. Hierzu lässt sich die weitere Schaltmuffe in drehfesten Eingriff mit den Losrädern des zweiten oder dritten Zahnradpaares bringen.

Gemäß einer bevorzugten Ausführungsform der Schaltvorrichtung ist das Zahnrad des ersten Zahnradpaares, welches sich mit der Schaltmuffe in drehfesten Eingriff bringen lässt, der Ausgangswelle zugeordnet. Demgemäß ist das Zahnrad des ersten Zahnradpaares als Losrad ausgebildet. Das Losrad ist beispielsweise mittels eines Wälzlagers auf der Ausgangswelle drehbar befestigt.

Sofern eine vierte Übersetzungsstufe bzw. ein viertes Zahnradpaar für das Zapfwellengetriebe erforderlich sein sollte, kann gemäß einer bevorzugten Ausführungsform der Schaltvorrichtung ein weiteres Trägerbauteil der Ausgangswelle zugeordnet sein, auf welchem mindestens zwei Losräder drehbar gelagert sind. Diese beiden Losräder sind beispielsweise durch das Zahnrad des ersten Zahnradpaares und ein weiteres Zahnrad eines vierten Zahnradpaares gebildet.

Um zwischen der Ausgangswelle und dem weiteren Trägerbauteil eine drehfeste Verbindung herstellen zu können, lässt sich die mit der Ausgangswelle drehfest verbundene Schaltmuffe in einer vorgegebenen Schaltstellung mit dem weiteren Trägerbauteil drehfest in Eingriff bringen. Insbesondere ist die drehfeste Verbindung zwischen der Ausgangswelle und dem weiteren Trägerbauteil mittels eines von dem Zapfwellenstummel betätigbaren Mechanismus herstellbar.

Gemäß dieser Ausführungsform lässt sich die mit der Ausgangswelle drehfest verbundene Schaltmuffe in einer vorgegebenen Schaltstellung mit dem weiteren Trägerbauteil drehfest in Eingriff bringen. Insoweit lässt sich eine drehfeste Verbindung zwischen der Ausgangswelle und dem weiteren Trägerbauteil mittels der Schaltmuffe herstellen. Ist dem weiteren Trägerbauteil eine eigene Schaltmuffe zugeordnet, die drehfest mit dem weiteren Trägerbauteil verbunden ist, so kann mittels dieser Schaltmuffe eine drehfeste Verbindung zwischen dem weiteren Trägerbauteil und einem auf dem weiteren Trägerbauteil drehbar gelagerten Losrad hergestellt werden. Dementsprechend ist es erforderlich, dass zur Drehmomentübertragung über die dem weiteren Trägerbauteil zugeordneten Losräder, beispielsweise über das erste oder vierte Zahnradpaar, einerseits die mit der Ausgangswelle drehfest verbundene Schaltmuffe mit dem weiteren Trägerbauteil und andererseits die dem weiteren Trägerbauteil zugeordnete Schaltmuffe mit einem dem weiteren Trägerbauteil zugeordneten Losrad in drehfesten Eingriff gebracht wird.

Gemäß einer bevorzugten Ausführungsform der Schaltvorrichtung weist der von dem Zapfwellenstummel betätigbare Mechanismus ein in axialer Richtung bewegliches Bauteil auf, welches von dem Zapfwellenstummel verschiebbar ist. Vorzugsweise ist das Bauteil vorgespannt, beispielsweise mittels einer Feder. Dieses kann in einer entsprechenden Bohrung oder Ausnehmung der Ausgangswelle angeordnet sein und eine im Wesentlichen zylindrische Form aufweisen. Die zur Vorspannung des Bauteils vorgesehene Feder kann ebenfalls in einer Bohrung, einem Sackloch oder einem Hohlbereich der Ausgangswelle angeordnet sein. Vorzugsweise ist das Bauteil derart ausgebildet, dass durch dessen Betätigung die der Ausgangswelle zugeordnete Schaltmuffe verschiebbar ist. Alternativ kann das in axialer Richtung bewegliche Bauteil mit einem weiteren Bauteil zusammenwirken, wobei mit dem weiteren Bauteil die Schaltmuffe der Ausgangswelle verschiebbar ist. Das weitere Bauteil kann beispielsweise als Spannstift ausgebildet sein, welcher sich durch das in axialer Richtung bewegliche Bauteil erstreckt und mit diesem fest verbunden ist. Der Spannstift kann mit einem oder mit beiden Enden mit der Schaltmuffe verbunden sein, sodass das axial beweglich angeordnete Bauteil, der Spannstift und die Schaltmuffe gemeinsam gegenüber der Ausgangswelle verschiebbar sind.

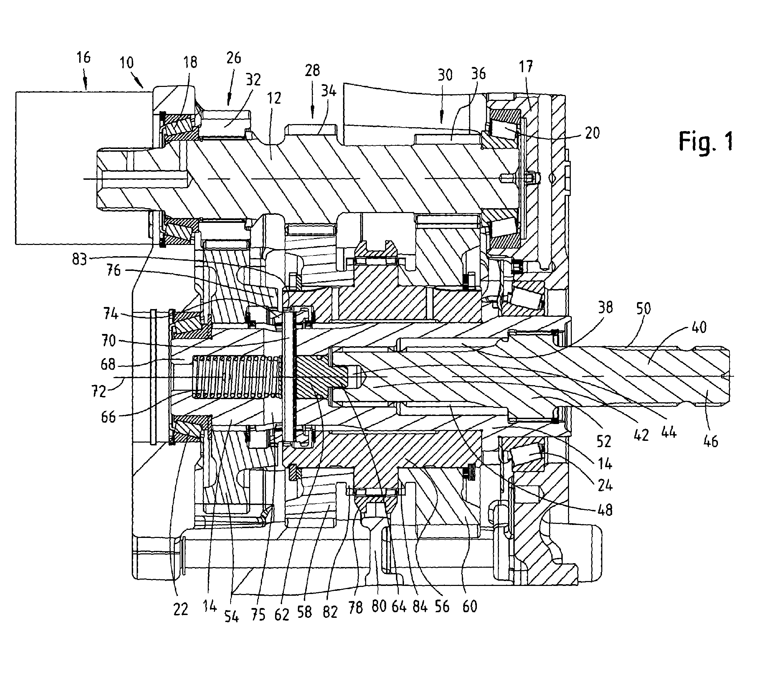

Die erfindungsgemäße Schaltvorrichtung für ein Arbeitsfahrzeug wird im Folgenden anhand der beigefügten Zeichnungen näher erläutert. Hierbei zeigen Fig. 1 bis Fig. 4 ein schematisch dargestelltes Ausführungsbeispiel der erfindungsgemäßen Schaltvorrichtung in jeweils unterschiedlichen Schaltzuständen.

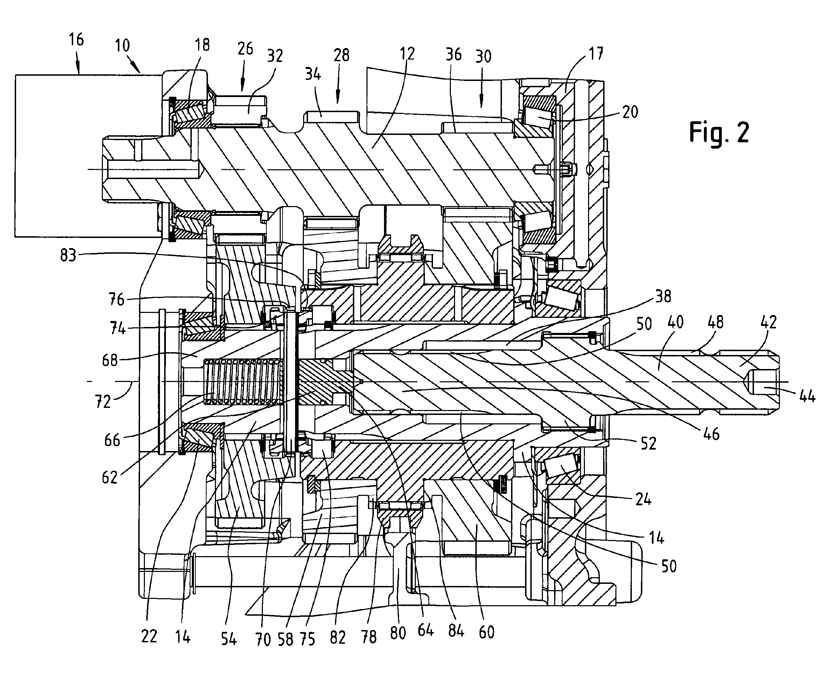

Fig. 1 zeigt ein Zapfwellengetriebe 10, welches eine Eingangswelle 12 und eine Ausgangswelle 14 aufweist. Über eine Kupplung 16, welche lediglich schematisch wiedergegeben ist, ist die Eingangswelle 12 des Zapfwellengetriebes 10 über ein nicht dargestelltes Getriebe mit einem Motor eines landwirtschaftlichen Arbeitsfahrzeugs verbindbar. Bei dem landwirtschaftlichen Arbeitsfahrzeug handelt es sich im vorliegenden Fall um einen Traktor. Die Eingangswelle 12 bzw. Ausgangswelle 14 ist in einem Gehäuse 17 mittels Wälzlagern 18 und 20 bzw. 22 und 24 drehbar befestigt. Ein Drehmoment kann von dem Motor des Traktors über eines von drei Zahnradpaaren 26, 28 oder 30 von der Eingangswelle 12 auf die Ausgangswelle 14 übertragen werden. Hierzu sind drehfest mit der Eingangwelle 12 verbundene Zahnräder 32, 34 und 36 vorgesehen. Die Zahnräder 32, 34 und 36 sind einteilig mit der Eingangswelle 12 ausgebildet. Das Zahnrad 32 ist dem ersten Zahnradpaar 26 zugeordnet, das Zahnrad 34 ist dem zweiten Zahnradpaar 28 zugeordnet und das Zahnrad 36 ist dem dritten Zahnradpaar 30 zugeordnet. Die Ausgangswelle 14 weist eine als Sackloch 44 ausgebildete Ausnehmung 38 auf, in welche ein Zapfwellenstummel 40 einführbar ist. Der Zapfwellenstummel 40 ist derart ausgebildet, dass dieser einerseits in einer ersten Weise entsprechend Fig. 1 in die Ausnehmung 38 eingeführt werden kann. Demgemäß befindet sich der Zapfwellenstummel 40 mit einem ersten Ende 42 in der Ausnehmung 38 der Ausgangswelle 14. Entsprechend Fig. 2 bis Fig. 4 ist der Zapfwellenstummel 40 in einer zweiten Weise in die Ausnehmung 38 der Ausgangswelle 14 eingeführt, bei welcher sich ein dem ersten Ende 42 gegenüberliegendes zweites Ende 46 des Zapfwellenstummels 40 in der Ausnehmung 38 befindet.

Das erste Ende 42 des Zapfwellenstummels 40 weist eine Außenverzahnung auf, durch welche ein 6-Zahn-Profil gebildet ist und welche für die Verwendung von mit einer Zapfwellendrehzahl von 540 RPM betreibbaren Anbaugeräten dient. Im Bereich des zweiten Endes 46 des Zapfwellenstummels 40 ist eine Außenverzahnung 50 vorgesehen, durch welche ein 21-Zahn-Profil gebildet ist und welche für Arbeitsgeräte verwendet werden kann, die mit einer Zapfwellendrehzahl von 1000 RPM betreibbar sind.

In einem mittleren Bereich 52 des Zapfwellenstummels 40 ist eine Außenverzahnung vorgesehen, welche sich mit einer Innenverzahnung der Ausgangswelle 14 in Eingriff bringen lässt, sodass durch Drehen der Ausgangswelle 14 über die Außen- bzw. Innenverzahnung zwischen Zapfwellenstummel 40 und Ausgangswelle 14 ein Drehmoment übertragen werden kann.

Auf der Ausgangswelle 14 ist ein Zahnrad 54 angeordnet. Das Zahnrad 54 ist als Losrad ausgebildet und drehbar gegenüber der Ausgangswelle 14 befestigt. Das Zahnrad 54 kämmt mit dem Zahnrad 32. Die Zahnräder 32 und 54 bilden das erste Zahnradpaar 26.

Ein Trägerbauteil 56 lässt sich drehfest mit der Ausgangswelle 14 verbinden, indem eine an einer Schaltmuffe 74 ausgebildete Außenverzahnung mit einer Innenverzahnung 83 des Trägerbauteils 56 in Eingriff gebracht wird. Dieser Betriebszustand ist in Fig. 2 bis Fig. 4 gezeigt. Auf dem Trägerbauteil 56 ist einerseits ein Zahnrad 58 angeordnet. Das Zahnrad 58 ist als Losrad ausgebildet und drehbar gegenüber dem Trägerbauteil 56 befestigt. Das Zahnrad 58 kämmt mit dem Zahnrad 34. Die Zahnräder 34 und 58 bilden das zweite Zahnradpaar 28. Andererseits ist auf dem Trägerbauteil 56 ein Zahnrad 60 angeordnet. Das Zahnrad 60 ist ebenfalls als Losrad ausgebildet und drehbar gegenüber dem Trägerbauteil 56 angeordnet. Das Zahnrad 60 kämmt mit dem Zahnrad 36. Die Zahnräder 36 und 60 bilden das dritte Zahnradpaar 30.

Ein in der Ausgangswelle 14 vorgesehenes Bauteil 62 ist mittels des ersten Endes 42 des Zapfwellenstummels 40 betätigbar. Das Bauteil 62 ist in axialer Richtung bewegbar. Gemäß Fig. 1 befindet sich das Bauteil 62 in einer rechten Schaltstellung. Dies ist möglich, da ein Vorsprung bzw. eine Nase 64 des Bauteils 62 in das Sackloch 44 des Zapfwellenstummels 40 eingreifen kann. Das Bauteil 62 wird mittels einer Feder 66 in Richtung einer rechten Schaltstellung vorgespannt, wobei die Feder 66 an einem Abstützbereich 68 der Ausgangswelle 14 anliegt. Wenn das zweite Ende 46 des Zapfwellenstummels 40 an dem Bauteil 62 zur Anlage kommt, wird dieses in die in Fig. 2 bis Fig. 4 gezeigte linke Schaltstellung verschoben, da die Nase 64 aufgrund des fehlenden Sacklochs nicht in den Zapfwellenstummel 40 eintreten kann. Ein Spannstift 70 ist fest mit dem Bauteil 62 verbunden. Der Spannstift 70 erstreckt sich quer zu einer Längsachse 72 der Ausgangswelle 14. Mit seinen beiden Enden steht der Spannstift 70 in fester Verbindung mit einer auf der Ausgangswelle 14 vorgesehenen und mit dieser drehfest verbundenen Schaltmuffe 74. In der Ausgangswelle 14 ist im Wesentlichen parallel zur Ausrichtung des Spannstifts 70 ein Führungsschlitz 75 vorgesehen, in welchem der Spannstift 70 verschoben werden kann. Das Bauteil 62, der Spannstift 70 und die Schaltmuffe 74 bewegen sich entgegen der Vorspannung der Feder 66 stets gemeinsam. So ist der Spannstift 70 gemäß Fig. 1 in seiner rechten Schaltstellung und gemäß Fig. 2 bis 4 in seiner linken Schaltstellung gezeigt. Dementsprechend befindet sich die auf der Ausgangswelle 14 vorgesehene Schaltmuffe 74 in einer rechten Schaltstellung bzw. einer linken Schaltstellung. Wenn sich die drehfest mit der Ausgangswelle 14 verbundene Schaltmuffe 74 in der rechten Schaltstellung gemäß Fig. 1 befindet, ist eine drehfeste Verbindung zwischen der Schaltmuffe 74 und einem Teil 76 des Zahnrads 54 hergestellt, wozu der Teil 76 eine Innenverzahnung aufweist, welche sich mit der Außenverzahnung der linken Seite der Schaltmuffe 74 in drehfesten Eingriff bringen lässt. In der in Fig. 1 gezeigten Stellung des Bauteils 62, des Spannstifts 70 und der Schaltmuffe 74 ist eine Drehmomentübertragung von der Eingangswelle 12 auf die Ausgangswelle 14 über das erste Zahnradpaar 26 möglich, da das mit dem Losrad 54 kämmende Zahnrad 32 über die Schaltmuffe 74 in Drehverbindung mit der Ausgangswelle 14 steht. In diesem Fall ist das Übersetzungsverhältnis des Zapfwellengetriebes 10 derart geschaltet, dass an das zweite Ende 46 des Zapfwellenstummels 40 eine Antriebswelle eines Arbeitsgeräts anschließbar ist, welches für einen Betrieb mit einer Zapfwellendrehzahl von 1.000 RPM ausgelegt ist.

Gemäß Fig. 2 ist der Zapfwellenstummel 40 mit dem zweiten Ende 46 in die Ausnehmung 38 der Ausgangswelle 14 eingeführt. In diesem Fall befinden sich das Bauteil 62, der Spannstift 70 und die Schaltmuffe 74 in ihrer jeweils linken Schaltstellung. Dementsprechend liegt keine drehfeste Verbindung zwischen dem Zahnrad 54 und der Schaltmuffe 74 bzw. der Ausgangswelle 14 vor.

Das Bauteil 62, der Spannstift 70 sowie gegebenenfalls die Feder 60 bilden damit letztlich einen von dem Zapfwellenstummel 40 betätigbaren Mechanismus zum Umschalten des Zapfwellengetriebes 10.

Ferner weist das Trägerbauteil 56 eine weitere Schaltmuffe 78 auf, welche drehfest mit diesem verbunden ist. Auch die weitere Schaltmuffe 78 ist in axialer Richtung bewegbar angeordnet. Hierzu ist eine Schaltgabel 80 vorgesehen, welche mittels eines nicht dargestellten Mechanismus betätigbar ist. Die weitere Schaltmuffe 78 ist in der in Fig. 2 gezeigten Schaltstellung zwischen den beiden Zahnrädern 58 und 60 angeordnet und steht weder mit dem Zahnrad 58 noch mit dem Zahnrad 60 in drehfester Verbindung. Insoweit befindet sich die weitere Schaltmuffe 78 in einer neutralen Schaltstellung, in welcher von der Eingangswelle 12 kein Drehmoment auf die Ausgangswelle 14 übertragen wird, da keines der Losräder 54, 58 oder 60 eine drehfeste Verbindung mit der Ausgangswelle 14 aufweist.

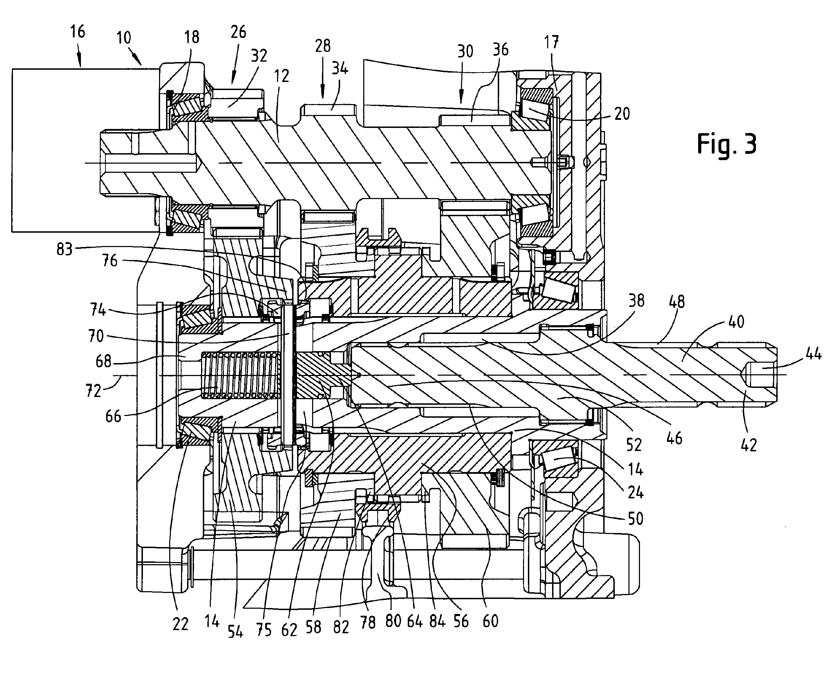

Fig. 3 zeigt das Zapfwellengetriebe 10, bei welchem sich die weitere Schaltmuffe 78 in einer linken Schaltstellung befindet. In diesem Fall steht die weitere Schaltmuffe 78 in drehfestem Eingriff mit einer an einem Teil 82 des Zahnrads 58 vorgesehenen Außenverzahnung. Somit steht die linke Innenverzahnung der Schaltmuffe 78 mit der Außenverzahnung des Teils 82 in drehfestem Eingriff. Dementsprechend erfolgt eine Drehmomentübertragung von der Eingangswelle 12 auf die Ausgangswelle 14 über das zweite Zahnradpaar 28, welches aus den Zahnrädern 34 und 58 besteht.

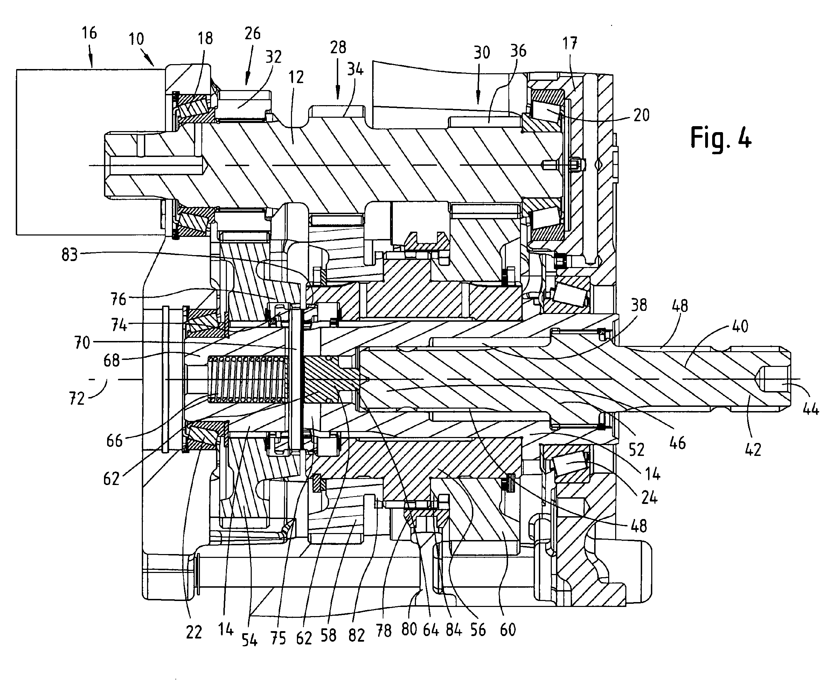

Fig. 4 zeigt das Zapfwellengetriebe 10, bei welchem sich die weitere Schaltmuffe 78 in einer rechten Schaltstellung befindet. In diesem Fall steht die rechte Innenverzahnung der weiteren Schaltmuffe 78 mit einer an einem Teil 84 des Zahnrads 60 vorgesehenen Außenverzahnung in drehfestem Eingriff. Dementsprechend erfolgt eine Drehmomentübertragung von der Eingangswelle 12 auf die Ausgangswelle 14 über das dritte Zahnradpaar 30, welches aus den Zahnrädern 36 und 60 besteht.

## Patentansprüche

1. Schaltvorrichtung eines Zapfwellengetriebes eines landwirtschaftlichen Arbeitsfahrzeugs, insbesondere eines Traktors, mit einer von einem Motor des landwirtschaftlichen Arbeitsfahrzeugs antreibbaren Eingangswelle (12) und einer Ausgangswelle (14), wobei die Eingangswelle (12) über drei Zahnradpaare (26, 28, 30) mit der Ausgangswelle (12) verbindbar ist, um wahlweise über eines der drei Zahnradpaare (26, 28, 30) Drehmoment von der Eingangswelle (12) auf die Ausgangswelle (14) zu übertragen, wobei drei Zahnräder (32, 34, 36) der Zahnradpaare (26, 28, 30) der Eingangswelle (12) zugeordnet sind, wobei drei Zahnräder (54, 58, 60) der Zahnradpaare (26, 28, 30) der Ausgangswelle (14) zugeordnet sind, wobei ein Zahnrad (32, 34, 36) eines Zahnradpaares (26, 28, 30) drehfest mit der Eingangswelle (12) oder der Ausgangswelle verbunden ist und wobei das andere Zahnrad (54, 58, 60) des Zahnradpaares (26, 28, 30) beispielsweise mittels einer Schaltmuffe (74, 78) drehfest mit der Ausgangswelle (14) oder der Eingangswelle verbindbar ist, wobei die zwei Zahnräder (32, 54; 34, 58; 36, 60) eines Zahnradpaares (26; 28; 30) miteinander kämmen, wobei die Ausgangswelle (14) eine Ausnehmung (38) aufweist, in welcher ein Zapfwellenstummel (40) reversibel einführbar ist, wobei an der Ausgangswelle (14) ein von einem Zapfwellenstummel (40) betätigbarer Mechanismus (62, 70) vorgesehen ist, mit welchem eine an der Ausgangswelle (14) vorgesehene und mit der Ausgangswelle (14) drehfest verbundene Schaltmuffe (74) betätigbar ist, wobei in einer vorgegebenen Schaltstellung der Schaltmuffe (74) diese drehfest mit einem Zahnrad (54) eines ersten Zahnradpaares (26) verbunden ist, **dadurch gekennzeichnet, dass** in einer von der vorgegebenen Schaltstellung abweichenden weiteren Schaltstellung der Schaltmuffe (74) die drehfeste Verbindung zwischen der Schaltmuffe (74) und dem Zahnrad (54) des ersten Zahnradpaares (26) gelöst ist, wobei mittels einer weiteren Schaltmuffe (78) eine drehfeste Verbindung mit einem Zahnrad (58) des zweiten Zahnradpaares (28) oder mit einem Zahnrad (60) des dritten Zahnradpaares (30) herstellbar ist.

2. Schaltvorrichtung nach Anspruch 1, **dadurch gekennzeichnet, dass** die weitere Schaltmuffe (78) drehfest mit der Ausgangswelle (14) verbunden ist.

3. Schaltvorrichtung nach Anspruch 2, **dadurch gekennzeichnet, dass** die weitere Schaltmuffe (78) zwischen zwei Zahnrädern (58, 60) des zweiten und dritten Zahnradpaares (28, 30) angeordnet ist und dass die Zahnräder (58, 60) als Losräder ausgebildet und der Ausgangswelle (14) zugeordnet sind.

4. Schaltvorrichtung nach Anspruch 1, **dadurch gekennzeichnet, dass** die weitere Schaltmuffe (78) drehfest mit der Eingangswelle (12) verbunden ist.

5. Schaltvorrichtung nach Anspruch 4, **dadurch gekennzeichnet, dass** die weitere Schaltmuffe (78) zwischen als Losräder ausgebildeten und der Eingangswelle (12) zugeordneten Zahnrädern (34, 46) des zweiten und dritten Zahnradpaares (28, 30) angeordnet ist.

6. Schaltvorrichtung nach einem der Ansprüche 1 bis 5, **dadurch gekennzeichnet, dass** ein Trägerbauteil (56) vorgesehen ist, auf welchem die als Losräder ausgebildeten Zahnräder (58, 60) des zweiten und dritten Zahnradpaares (28, 30) drehbar gelagert sind und dass das Trägerbauteil (56) drehfest mit der Ausgangswelle (14) oder der Eingangswelle (12) verbindbar ist.

7. Schaltvorrichtung nach Anspruch 6, **dadurch gekennzeichnet, dass** dem Trägerbauteil (56) die weitere Schaltmuffe (78) zugeordnet ist, und dass die weitere Schaltmuffe (78) drehfest mit dem Trägerbauteil (56) verbunden ist.

8. Schaltvorrichtung nach Anspruch 7, **dadurch gekennzeichnet, dass** sich die weitere Schaltmuffe (78) in drehfesten Eingriff mit den Losrädern (58, 60) des zweiten oder dritten Zahnradpaares (28, 30) bringen lässt.

9. Schaltvorrichtung nach einem der Ansprüche 1 bis 8, **dadurch gekennzeichnet, dass** das Zahnrad (54) des ersten Zahnradpaares (26), welches sich mit der Schaltmuffe (74) in drehfesten Eingriff bringen lässt, der Ausgangswelle (14) zugeordnet ist.

10. Schaltvorrichtung nach Anspruch 9, **dadurch gekennzeichnet, dass** das Zahnrad (54) des ersten Zahnradpaares (26) als Losrad ausgebildet ist.

11. Schaltvorrichtung nach einem der Ansprüche 1 bis 10, **dadurch gekennzeichnet, dass** ein weiteres Trägerbauteil der Ausgangswelle (14) zugeordnet ist, auf welchem mindestens zwei Losräder drehbar gelagert sind.

12. Schaltvorrichtung nach Anspruch 11, **dadurch gekennzeichnet, dass** sich die mit der Ausgangswelle (14) drehfest verbundene Schaltmuffe (74) in einer vorgegebenen Schaltstellung mit dem weiteren Trägerbauteil drehfest in Eingriff bringen lässt.

13. Schaltvorrichtung nach Anspruch 11 oder 12, **dadurch gekennzeichnet, dass** dem weiteren Trägerbauteil eine Schaltmuffe zugeordnet ist und dass die Schaltmuffe drehfest mit dem weiteren Trägerbauteil verbunden ist.

14. Schaltvorrichtung nach Anspruch 13, **dadurch gekennzeichnet, dass** sich die Schaltmuffe in drehfesten Eingriff mit den auf dem weiteren Trägerbauteil gelagerten Losrädern bringen lässt.

15. Schaltvorrichtung nach einem der Ansprüche 1 bis 14, **dadurch gekennzeichnet, dass** der von dem Zapfwellenstummel (40) betätigbare Mechanismus ein in axialer Richtung bewegliches Bauteil (62) aufweist, welches von dem Zapfwellenstummel (40) verschiebbar ist, und dass das in axialer Richtung bewegliche Bauteil (62) vorgespannt ist, beispielsweise mittels einer Feder (66).

16. Schaltvorrichtung nach Anspruch 15, **dadurch gekennzeichnet, dass** das in axialer Richtung bewegliche Bauteil (62) derart ausgebildet ist, dass durch dessen Betätigung die der Ausgangswelle (14) zugeordnete Schaltmuffe (74) verschiebbar ist oder dass das in axialer Richtung bewegliche Bauteil (62) mit einem weiteren Bauteil (70) zusammenwirkt, mit welchem die Schaltmuffe (74) der Ausgangswelle (14) verschiebbar ist.

## Claims

1. Shift device of a power take-off transmission of an agricultural utility vehicle, in particular a tractor, comprising an input shaft (12) that can be driven by an engine of the agricultural utility vehicle, and an output shaft (14), the input shaft (12) being connectable to the output shaft (14) by way of three gear pairs (26, 28, 30), in order to selectively transmit torque from the input shaft (12) to the output shaft (14) via one of the three gear pairs (26, 28, 30), three gear wheels (32, 34, 36) of the gear pairs (26, 28, 30) being assigned to the input shaft (12), three gear wheels (54, 58, 60) of the gear pairs (26, 28, 30) being assigned to the output shaft (14), one gear wheel (32, 34, 36) of a gear pair (26, 28, 30) being rotationally fixed to the input shaft (12) or the output shaft and the other gear wheel (54, 58, 60) of the gear pair (26, 28, 30) being rotationally fixable to the output shaft (14) or the input shaft, for example by means of a gearshift sleeve (74, 78), the two gear wheels (32, 54: 34, 58; 36, 60) of a gear pair (26; 28; 30) intermeshing with one another, the output shaft (14) having a recess (38), in which a power take-off stub shaft (40) can be reversibly introduced, a mechanism (62, 70), which can be actuated by a power take-off stub shaft (40) and which serves to actuate a gearshift sleeve (74), provided on the output shaft (14) and rotationally fixed to the output shaft (14), being provided on the output shaft (14), the gearshift sleeve (74) in a predetermined shift position of the gearshift sleeve (74) being rotationally fixed to a gear wheel (54) of a first gear pair (26), **characterized in that** in a further shift position, differing from the predetermined shift position, of the gearshift sleeve (74) the rotationally fixed connection is disengaged between the gearshift sleeve (74) and gear wheel (54) of the first gear pair (26) by means of a further gearshift sleeve (78) a rotationally fixed connection being established with a gear wheel (58) of the second gear pair (28) or with a gear wheel (60) of the third gear pair (30).

2. Shift device according to Claim 1, **characterized in that** the further gearshift sleeve (78) is rotationally fixed to the output shaft (14).

3. Shift device according to Claim 2, **characterized in that** the further gearshift sleeve (78) is arranged between two gear wheels (58, 60) of the second and third gear pair (28, 30) and **characterized in that** the gear wheels (58, 60) are embodied as loose gears and are assigned to the output shaft (14).

4. Shift device according to Claim 1, **characterized in that** the further gearshift sleeve (78) is rotationally fixed to the input shaft (12).

5. Shift device according to Claim 4, **characterized in that** the further gearshift sleeve (78) is arranged between two gear wheels (34, 46) of the second and third gear pair (28, 30) embodied as loose gears and assigned to the input shaft (12).

6. Shift device according to one of Claims 1 to 5, **characterized in that** a carrier component (56) is provided, on which the gear wheels (58, 60), in the form of loose gears, of the second and third gear pair (28, 30), are rotatably supported and **characterized in that** the carrier component (56) can be rotationally fixed to the output shaft (14) or to the input shaft (12).

7. Shift device according to Claim 6, **characterized in that** the further gearshift sleeve (78) is assigned to the carrier component (56) and **characterized in that** the further gearshift sleeve (78) is rotationally fixed to the carrier component (56).

8. Shift device according to Claim 7, **characterized in that** the further gearshift sleeve (78) is brought into rotationally fixed engagement with the loose gears (58, 60) of the second or third gear pair (28, 30).

9. Shift device according to one of Claims 1 to 8, **characterized in that** the gear wheel (54) of the first gear pair (26), which is brought into rotationally fixed engagement with the gearshift sleeve (74), is assigned to the output shaft (14).

10. Shift device according to Claim 9, **characterized in that** the gear wheel (54) of the first gear pair (26) is embodied as a loose gear.

11. Shift device according to one of Claims 1 to 10, **characterized in that** a further carrier component is assigned to the output shaft (14), on which at least two loose gears are rotatably supported.

12. Shift device according to Claim 11, **characterized in that** the gearshift sleeve (74) rotationally fixed to the output shaft (14) is brought in a predetermined shift position into rotationally fixed engagement with the further carrier component.

13. Shift device according to Claim 11 or 12, **characterized in that** a gearshift sleeve is assigned to the further carrier component and **characterized in that** the gearshift sleeve is rotationally fixed to the further carrier component.

14. Shift device according to Claim 13, **characterized in that** the gearshift sleeve is brought into rotationally fixed engagement with the loose gears supported on the further carrier component.

15. Shift device according to one of Claims 1 to 14, **characterized in that** the mechanism actuated by the power take-off stub shaft (40) comprises a component (62) moveable in an axial direction, which can be moved by means of the power take-off stub shaft (40), and that the component (62) movable in an axial direction is biased, for example by means of a spring (66).

16. Shift device according to Claim 15, **characterized in that** the component (62) movable in an axial direction is formed in such a way that through its actuation the gearshift sleeve (74) assigned to the output shaft (14) can be moved, or that the component (62) movable in an axial direction interacts with a further component (70), which serves to move the gearshift sleeve (74) of the output shaft (14).

## Revendications

1. Dispositif de commutation d'un engrenage d'arbre de prise de force d'un engin agricole, en particulier d'un tracteur, comprenant un arbre d'entrée (12) pouvant être entraîné par un moteur de l'engin agricole et un arbre de sortie (14), l'arbre d'entrée (12) pouvant être connecté par le biais de trois paires de roues dentées (26, 28, 30) à l'arbre de sortie (12), afin de transférer au choix, par le biais de l'une des trois paires de roues dentées (26, 28, 30), un couple de l'arbre d'entrée (12) à l'arbre de sortie (14), trois roues dentées (32, 34, 36) des paires de roues dentées (26, 28, 30) étant associées à l'arbre d'entrée (12), trois roues dentées (54, 58, 60) des paires de roues dentées (26, 28, 30) étant associées à l'arbre de sortie (14), une roue dentée (32, 34, 36) d'une paire de roues dentées (26, 28, 30) étant connectée de manière solidaire en rotation à l'arbre d'entrée (12) ou à l'arbre de sortie et l'autre roue dentée (54, 58, 60) de la paire de roues dentées (26, 28, 30) pouvant par exemple être connectée au moyen d'un manchon de commutation (74, 78) de manière solidaire en rotation à l'arbre de sortie (14) ou à l'arbre d'entrée, les deux roues dentées (32, 54 ; 34, 58 ; 36, 60) d'une paire de roues dentées (26, 28, 30) s'engrenant l'une avec l'autre, l'arbre de sortie (14) présentant un logement (38) dans lequel un bout d'arbre de prise de force (40) peut être introduit de manière réversible, un mécanisme (62, 70) pouvant être commandé par un bout d'arbre de prise de force (40) étant prévu sur l'arbre de sortie (14), avec lequel un manchon de commutation (74) prévu sur l'arbre de sortie (14) et connecté de manière solidaire en rotation à l'arbre de sortie (14) peut être commandé, le manchon de commutation (74), dans sa position de commutation prédéfinie, étant connecté de manière solidaire en rotation à une roue dentée (54) d'une première paire de roues dentées (26), **caractérisé en ce que** dans une autre position de commutation du manchon de commutation (74) s'écartant de la position de commutation prédéfinie, la connexion solidaire en rotation entre le manchon de commutation (74) et la roue dentée (54) de la première paire de roues dentées (26) est libérée, une connexion solidaire en rotation à une roue dentée (58) de la deuxième paire de roues dentées (28) ou à une roue dentée (60) de la troisième paire de roues dentées (30) pouvant être établie au moyen d'un autre manchon de commutation (78).

2. Dispositif de commutation selon la revendication 1, **caractérisé en ce que** l'autre manchon de commutation (78) est connecté de manière solidaire en rotation à l'arbre de sortie (14).

3. Dispositif de commutation selon la revendication 2, **caractérisé en ce que** l'autre manchon de commutation (78) est disposé entre deux roues dentées (58, 60) de la deuxième et de la troisième paire de roues dentées (28, 30) et **en ce que** les roues dentées (58, 60) sont réalisées sous forme de roues libres et sont associées à l'arbre de sortie (14).

4. Dispositif de commutation selon la revendication 1, **caractérisé en ce que** l'autre manchon de commutation (78) est connecté de manière solidaire en rotation à l'arbre d'entrée (12).

5. Dispositif de commutation selon la revendication 4, **caractérisé en ce que** l'autre manchon de commutation (78) est disposé entre des roues dentées (34, 46) réalisées sous forme de roues libres et associées à l'arbre d'entrée (12) de la deuxième et de la troisième paire de roues dentées (28, 30).

6. Dispositif de commutation selon l'une quelconque des revendications 1 à 5, **caractérisé en ce qu'**un composant de support (56) est prévu, sur lequel les roues dentées (58, 60) réalisées sous forme de roues libres de la deuxième et de la troisième paire de roues dentées (28, 30) sont montées de manière rotative, et **en ce que** le composant de support (56) peut être connecté de manière solidaire en rotation à l'arbre de sortie (14) ou à l'arbre d'entrée (12).

7. Dispositif de commutation selon la revendication 6, **caractérisé en ce que** l'autre manchon de commutation (78) est associé au composant de support (56), et **en ce que** l'autre manchon de commutation (78) est connecté de manière solidaire en rotation au composant de support (56).

8. Dispositif de commutation selon la revendication 7, **caractérisé en ce que** l'autre manchon de commutation (78) peut être amené en prise solidaire en rotation avec les roues libres (58, 60) de la deuxième et de la troisième paire de roues dentées (28, 30).

9. Dispositif de commutation selon l'une quelconque des revendications 1 à 8, **caractérisé en ce que** la roue dentée (54) de la première paire de roues dentées (26), qui peut être amenée en prise solidaire en rotation avec le manchon de commutation (74), est associée à l'arbre de sortie (14).

10. Dispositif de commutation selon la revendication 9, **caractérisé en ce que** la roue dentée (54) de la première paire de roues dentées (26) est réalisée sous forme de roue libre.

11. Dispositif de commutation selon l'une quelconque des revendications 1 à 10, **caractérisé en ce qu'**un autre composant de support est associé à l'arbre de sortie (14), sur lequel au moins deux roues libres sont montées à rotation.

12. Dispositif de commutation selon la revendication 11, **caractérisé en ce que** le manchon de commutation (74) connecté de manière solidaire en rotation à l'arbre de sortie (14) peut être amené en prise solidaire en rotation avec l'autre composant de support dans une position de commutation prédéfinie.

13. Dispositif de commutation selon la revendication 11 ou 12, **caractérisé en ce qu'**à l'autre composant de support est associé un manchon de commutation et **en ce que** le manchon de commutation est connecté de manière solidaire en rotation à l'autre composant de support.

14. Dispositif de commutation selon la revendication 13, **caractérisé en ce que** le manchon de commutation peut être amené en prise solidaire en rotation avec les roues libres montées sur l'autre composant de support.

15. Dispositif de commutation selon l'une quelconque des revendications 1 à 14, **caractérisé en ce que** le mécanisme pouvant être commandé par le bout d'arbre de prise de force (40) présente un composant (62) déplaçable dans la direction axiale, qui peut être déplacé par le bout d'arbre de prise de force (40), et **en ce que** le composant (62) déplaçable dans la direction axiale est précontraint, par exemple au moyen d'un ressort (66).

16. Dispositif de commutation selon la revendication 15, **caractérisé en ce que** le composant (62) déplaçable dans la direction axiale est réalisé de telle sorte que son actionnement permette de déplacer le manchon de commutation (74) associé à l'arbre de sortie (14), ou en ce que le composant (62) déplaçable dans la direction axiale coopère avec un autre composant (70), avec lequel le manchon de commutation (74) de l'arbre de sortie (14) peut être déplacé.
